# EUROPEAN PATENT APPLICATION

(11) **EP 4 604 254 A1**
(43) Date of publication of application: **20.08.2025**
(21) Application number: 23925664.7
(22) Date of filing: 03.03.2023
(51) Int. Cl.: H01M 10/058

(54) **ELECTRODE ASSEMBLY, BATTERY CELL, BATTERY AND ELECTRIC DEVICE**

(71) Applicant: Contemporary Amperex Technology (Hong Kong) Limited, Central (HK)
(72) Inventor: GONG, Youlai, Ningde, Fujian 352100 (CN); WU, Bingzhao, Ningde, Fujian 352100 (CN); LIN, Jiang, Ningde, Fujian 352100 (CN); OU, Fuming, Ningde, Fujian 352100 (CN); LIN, Chuandong, Ningde, Fujian 352100 (CN)
(74) Representative: Thoma, Michael
(86) International application number: PCT/CN2023/079648
(87) International publication number: WO 2024/182938

(57) **Abstract**

The embodiment of the present application provides an electrode assembly, a battery cell, a battery, and an electric apparatus, which belong to the technical field of batteries. Here, the electrode assembly comprises a plurality of structural units laminated in a first direction, the structural unit comprising a first plate and a second plate. The first electrode plate comprises a bending section and a plurality of straight sections, and two adjacent straight sections are spaced apart in a first direction and connected to one bent section. The second plate has a polarity opposite to that of the first plate, and alternates with the straight sections in the first direction. This structure can reduce the deflection of the electrode assembly during molding, thereby reducing the risk of misalignment between the plates to improve the reliability of the electrode assembly.

## Description

### TECHNICAL FIELD

The present application relates to the technical field of batteries, and in particular, to an electrode assembly, a battery cell, a battery, and an electric apparatus.

### BACKGROUND

With the development of new energy technologies, a battery is applied more and more widely, for example, in mobile phones, notebook computers, electric bicycles, electric vehicles, electric airplanes, electric ships, electric toy cars, electric toy ships, electric toy airplanes, electric tools, etc.

The battery has a cell in which an electrode assembly is generally classified into two types, a laminated type and a wound type. The laminated electrode assembly has advantages of a small local internal resistance and a high energy density, but its reliability still needs to be improved. Therefore, there is an urgent need in battery technology for a solution to improve the electrode assembly for the reliability.

### SUMMARY

The embodiment of the present application provides an electrode assembly, a battery cell, a battery, and an electric apparatus, and may improve the electrode assembly for the reliability.

According to a first aspect, the embodiment of the present application provides an electrode assembly including a plurality of structural units laminated in a first direction, and the structural unit comprises: a first plate comprising a bending section and a plurality of straight sections, wherein two adjacent straight sections are spaced apart in a first direction and connected to one bending section; and a second plate having a polarity opposite to that of the first plate, wherein the second plate alternates with the straight sections in the first direction.

In the above technical solution, the electrode assembly comprises the plurality of structural units, the first plate in each structural unit is in a folded structure formed by the folding section and the straight section, and the straight section of the first plate alternate with the second plate. Thus, during production, the first plate and the second plate can be molded into a structural unit, and a plurality of structural units are laminated together, so that the deflection of the electrode assembly can be reduced during molding, thereby reducing the risk of misalignment between the plates to improve the reliability of the electrode assembly.

In some embodiments, at least one of the structural units has the number of the straight sections of the first plate which is more than two. Thus, the first plate in at least one of the structural units has more straight sections, thereby being able to improve the efficiency of producing the electrode assembly.

In some embodiments, at least one of the structural units has the number of the straight sections of the first plate which is odd. When the first plate has an odd number of the straight sections, the first plate has an even number of the bending sections, and the structural unit has the same number of the bending sections at both sides perpendicular to the first direction. When the first plate is subjected to a force in the first direction, the bending sections at both sides of the structural unit can be deformed, the first plate has a better structural stability, and the structural unit is less likely to be deflected, thereby reducing the risk of mismatch between the plates, and improving the electrode assembly for the reliability.

In some embodiments, each of the structural units has the number of the straight sections of the first plate which is more than two. In this way, the first plate in each of the structural units can have more straight sections, so that given the fixed size of the electrode assembly in the first direction, advantageously, the number of the structural units in the electrode assembly can be reduced, thereby being able to further improve the efficiency of producing the electrode assembly.

In some embodiments, each of the structural units has the number of the straight sections of the first plate which is odd. In this way, the number of the bending sections in each first plate is even, and each of the structural units has the same number of the bending sections at both sides in the direction perpendicular to the first direction, and when the first plate is subjected to a force in the first direction, the bending sections at both sides of the structural unit can be deformed, so that the first plate in each structural unit has a relatively good structural stability, and the risk of the deflection of the structural unit is further reduced, thereby reducing the risk of the deflection of the electrode assembly.

In some embodiments, each of the structural units has the number of the straight sections of the first plate which is three. In this way, on one hand, the first plate can have a reduced risk of tilt during folding, and on the other hand, the first plate in the structural unit can have a relatively good stability after being molded, thereby reducing the risk of deflection of the electrode assembly.

In some embodiments, at least two of the structural units have unequal numbers of straight sections of the first plate. In this way, the electrode assembly has various structural units, and the plurality of structural units can be combined in many manners, so that the electrode assembly can be improved for the versatility to meet the market demand to a larger degree.

In some embodiments, the plurality of structural units comprises a first structural unit, a second structural unit, and a third structural unit arranged sequentially in the first direction, wherein the first structural unit and the third structural unit both have an even number of the straight sections of the first plate, and the second structural unit has an odd number of the straight sections of the first plate. The second structural unit in the middle has an odd number of the straight sections, the first structural unit and third structural unit at both sides of the second structural unit respectively both have an even number of the straight sections, and the second structural unit has the same number of the bending sections at both sides perpendicular to the first direction, and when the combined structure formed by the first structural unit, second structural unit, and third structural unit is subjected to a force in the first direction, the combined structure enables a relatively small difference between the deformation amounts of both sides in the direction perpendicular to the first direction, so that the combined structure has a better structural stability and is less likely to be deflected.

In some embodiments, two straight sections located at both ends of the first plate in the first direction are a first straight section and a second straight section; in two adjacent structural units, the first straight section of one structural unit and the second straight section of the other structural unit are two adjacent straight sections, and in a second direction, an end, away from the bending section, of the first straight section of the one structural unit and an end, away from the bending section, of the second straight section of the other structural unit are located at both sides of the electrode assembly, respectively, and the second direction is perpendicular to the first direction. In this way, the electrode assembly has two adjacent bending sections, which are not too far apart or too close, at each side in the second direction, so as to enable a relatively rational layout, so that the electrode assembly has a better structural stability, thereby further reducing the risk of deflection.

In some embodiments, in the structural unit, the number of the straight sections of the first plate is equal to the number of the second plates. In this way, the straight sections in the structural units correspond to the second plates one by one, so that the straight sections and the second plates in two adjacent structural units can be arranged alternately, facilitating to increase the capacity of the battery cell.

In some embodiments, the electrode assembly further comprises a third plate having the same polarity as the first plate; and in the first direction, the third plate is provided at least one side of the plurality of structural units, and the third plate is adjacent to a second plate of an adjacent structural unit. In this way, the outermost second plate of the structural unit located at the end of the electrode assembly is fully utilized, facilitating to increase the capacity of the battery cell.

In some embodiments, the first plate is a negative plate, and the second plate is a positive plate. In this way, it is easier to cover the positive plate with the negative plate, and reduce the risk of protruding the positive plate beyond the negative plate, thereby improving the reliability of the electrode assembly.

In some embodiments, each straight section is provided with a first tab, and a plurality of first tabs in each structural unit are aligned in a first direction; and/or each second plate is provided with a second tab, each structural unit comprises a plurality of second plates, and the plurality of second tabs in each structural unit are aligned in the first direction. If the plurality of first tabs in the structural unit are aligned in the first direction to facilitate bus connection, the entire structural unit can be cut when the first tabs are cut, thereby improving the efficiency of cutting the first tabs and improving the production efficiency; and if the plurality of second tabs in the structural unit are aligned in the first direction to facilitate bus connection, the entire structural unit can be cut when the second tabs are cut, thereby improving the efficiency of cutting the second tabs and improving the production efficiency.

In some embodiments, the structural unit further comprises a separator to which both the first plate and the second plate are joined, the separator being configured to separate the first plate and the second plate. The separator achieves insulation separation between the first plate and second plate, reducing the risk of internal short circuit of the electrode assembly. The first plate and the second plate are both joined to the separator, so that the first plate, the second plate and the separator in the structural unit are well integrated, to reduce the risk of misalignment between the first plate and the second plate.

In some embodiments, the bending section is provided with a guide portion configured to guide bending of the bending section. By the guide portion, the first plate can be bent at an indicated position, and thus, the efficiency of folding the first plate is increased, the consistency of the folding position is higher, the position of the straight section relative to the second plate is more accurate, and the reliability of the electrode assembly is ensured.

In some embodiments, the guide portion comprises a groove provided in the bending section. The bending section is weaker in the region where the groove is provided, and the groove has a good guiding effect, so that the first plate is more easily bent at the groove to correspondingly form the bending section. Such a guide portion has a simple structure and can be easily molded.

In some embodiments, the bending section comprises a current collector and two active material layers, the two active material layers are provided at both sides of the current collector, respectively, and at least one of the active material layers is provided with the groove. By providing the groove in at least one of the active material layers in the bending section, a part of the bending section can be thinned and weakened, and such an implementation is simple.

In some embodiments, one of the two active material layers is provided with a groove. In this way, the difficulty of molding the first plate can be reduced.

In some embodiments, the two active material layers are provided with grooves. In this way, the bending section is thinner and easy to bend in the region where the groove is provided.

In some embodiments, the guide portion further comprises a through hole passing through the current collector, the region where the current collector corresponds to the groove forms an inactive material layer region, and the through hole is provided in the inactive material layer region. The provision of the through hole reduces the rigidity of the inactive material layer region of the current collector, and the folding effect is enhanced by reducing the rigidity of the inactive material layer region, further improving the efficiency of folding the first plate. In addition, in the battery cell, an electrolyte can flow between the first plate and second plate through the through hole, thereby facilitating to soak the plates by the electrolyte.

In some embodiments, the inactive material layer is provided with a plurality of through holes provided at intervals in a width direction of the first plate. In this way, the rigidity of the current collector is further reduced in the inactive material layer region, so that the first plate is more easily bent in the inactive material layer region.

In some embodiments, the groove extends in the width direction of the first plate and passes through the active material layer. The groove with this structure is more easily molded, and thus, the first plate is more easily bent in the region of the groove.

In some embodiments, the active material layer is provided with a plurality of grooves provided at intervals in a width direction of the first plate. In this way, the first plate has a good bending property in the region of the plurality of grooves, and the first plate has a sufficient strength in the region, with a less risk of breakage.

In some embodiments, the bending section comprises a current collector and two active material layers, the two active material layers are provided at both sides of the current collector, respectively, and the guide portion includes a through hole disposed in the bending section; the through hole passes through the current collector and the two active material layers, or the through hole passes through the current collector and the two active material layers cover the through hole. The region of the bending section where the through hole is provided has a reduced rigidity, so that the first plate is more easily bent at the through hole to correspondingly form the bending section. if the through hole passes through the current collector and the two active material layers, the first plate has an improved bending property in the region where the through hole is provided. In addition, in the battery cell, an electrolyte can flow between the first plate and second plate through the through hole, thereby facilitating to soak the plates by the electrolyte. If the through hole passes through the current collector and the two active material layers cover the through hole, the first plate has a sufficient strength in the region where the through hole is provided, with a less risk of breakage during bending of the first plate. Additionally, when the first plate is molded, the through hole may be formed in the current collector, and the active material layer is provided on the surface of the current collector, so that the active material covers the through hole, thereby reducing the difficulty in molding the first plate.

In some embodiments, the guide portion comprises a plurality of through holes arranged at intervals in the width direction of the first plate. In this way, the rigidity is further reduced for the region of the bending section where the through hole is provided, so that the first plate is more easily bent in the region where the through hole is provided.

In some embodiments, the through hole is a rectangular hole. This through hole has a simple structure and is easily molded.

In some embodiments, the cross section of the through hole is a rectangle having a length direction identical to the width direction of the first plate. In this way, the folding position of the first plate is more accurate.

In some embodiments, the rectangle has a length of a and a width of b, where 10 ≤ a/b ≤ 400. When a/b <10, the through hole has a relatively large size in the bending direction of the bending section, the first plate has a relatively poor folding consistency in the region of the through hole, thereby affecting the folding accuracy of the first plate; and when a/b> 400, the through hole has a relatively small size in the bending direction of the bending section, the through hole has a relatively weak ability to guide the bending of the first plate, thereby also affecting the folding accuracy of the first plate. Therefore, when 10≤a/b≤400, the through hole is an elongated structure extending in the width direction of the first plate, the first plate has the folding position with an improved consistency, so that the folding position of the first plate is more accurate, to improve the efficiency of folding the first plate.

In some embodiments, 20 ≤ a/b ≤ 100. The efficiency of folding the first plate is further improved.

In some embodiments, 3 mm ≤ a ≤ 20 mm and/or 0.05 mm ≤ b ≤ 0.3 mm.

According to a second aspect, an embodiment of the present application provides a battery cell, comprising a housing and the electrode assembly provided in any one of the embodiments of the first aspect, wherein the electrode assembly is accommodated in the housing.

According to a third aspect, an embodiment of the present application provides a battery comprising the battery cell provided in any one of the embodiments of the second aspect.

According to a fourth aspect, an embodiment of the present application provides an electric apparatus, including the battery cell provided in any one of the embodiments of the second aspect, where the battery cell is used to provide electrical energy.

### DESCRIPTION OF THE DRAWINGS

In order to more clearly illustrate the technical solutions of the embodiment of the present application, the figures used in the embodiment are briefly described below. It should be understood that the following figures merely show some embodiments of the present application and thus should not be considered as limiting the scope. From these figures, those of ordinary skill in the art may also obtain other related figures without the exercise of inventive effort.
FIG. 1 is a schematic structural diagram of a vehicle provided by some embodiments of the present application;
FIG. 2 is an exploded view of a battery provided by some embodiments of the present application;
FIG. 3 is an exploded view of a battery cell provided by some embodiments of the present application;
FIG. 4 is a schematic structural diagram of an electrode assembly provided by some embodiments of the present application;
FIG. 5 is a schematic structural diagram of an electrode assembly provided by still some embodiments of the present application;
FIG. 6 is a schematic structural diagram of an electrode assembly provided by still other embodiments of the present application;
FIG. 7 is a schematic structural diagram of an electrode assembly provided by other some embodiments of the present application;
FIG. 8 is an axonometric view of an electrode assembly provided by some embodiments of the present application;
FIG. 9 is an axonometric view of the structural unit shown in FIG. 8;
FIG. 10 is a schematic structural view of the structural unit shown in FIG. 9 after unfolding;
FIG. 11 is an axonometric view of a first plate provided by some embodiments of the present application;
FIG. 12 is a schematic structural diagram of a first plate provided by some embodiments of the present application;
FIG. 13 is a partial view of the first plate shown in FIG. 12 after unfolding;
FIG. 14 is a top view of the first plate shown in FIG. 13;
FIG. 15 is a schematic structural diagram of a first plate provided by still some embodiments of the present application;
FIG. 16 is a partial view of the first plate shown in FIG. 15 after unfolding;
FIG. 17 is a partial view of a first plate provided by still some embodiments of the present application after unfolding;
FIG. 18 is a top view of the first plate shown in FIG. 17;
FIG. 19 is a top view of a first plate provided by some embodiments of the present application after unfolding;
FIG. 20 is a top view of a first plate provided by still some embodiments of the present application after unfolding;
FIG. 21 is a partial view of a first plate provided by other some embodiments of the present application after unfolding;
FIG. 22 is a top view of the first plate shown in FIG. 21;
FIG. 23 is a partial view of a first plate provided by still other embodiments of the present application after unfolding;
FIG. 24 is a top view of the current collector shown in FIG. 23;
FIG. 25 is a partially enlarged view of A in FIG. 18; and
FIG. 26 is a partially enlarged view of B in FIG. 22.

Reference Number: 1-Housing 11-Casing 12-End Cap 2-Electrode Assembly 21-Positive Tab 22-Negative Tab 23-Structural Unit 23a-First Structural Unit 23b-Second Structural Unit 23c-Third Structural Unit 231 - First Plate 2311 - Straight Section 2311a - First Straight Section 2311b - Second Straight Section 2312 - Bending Section 23121 - Guide Portion 23122 - Groove 23123 - Current Collector 23124 - Active Material Layer 23125 - Inactive Material Layer Region 23126 - Through Hole 2313 - First Tab 232 - Second Plate 2321 - Second Tab 233 - Separator 234 - Third Plate 3 - Positive Electrode Terminal 4 - Negative Electrode Terminal 10 - Battery Cell 20 - Box 201 - First Portion 202 - Second Portion 100 - Battery 200 - Controller 300 - Motor 1000 - Vehicle W-Bending Direction X-First Direction Y-Second Direction Z-Width Direction.

### DETAILED DESCRIPTION

To clarify the objective, technical solution, and advantage of the embodiments of the present application, the technical solutions in the embodiments are described below with reference to the figures therein. Obviously, the described embodiments are a part of, not all of, the embodiments of the present application. All other embodiments obtained by those of ordinary skill in the art based on the embodiments of the present application without the exercise of inventive effort shall fall within the scope of protection of the present application.

Unless defined otherwise, all technical and scientific terms used herein have the same meaning as commonly understood by those of ordinary skill in the art to which the present application belongs; the terms used in the description of the present application are used for describing particular embodiments only and are not intended to limit the present application; and the terms "comprising" and "having" and any variations thereof in the description and claims of the present application and the above figure description are intended to cover non-exclusive inclusion. The terms "first", "second" and the like in the description and the claims of the present application or in the figures described above are used for distinguishing between different objects, not for describing a particular order or priority relation.

Reference to "an embodiment" in the application means that a particular feature, structure, or characteristic described in connection with the embodiment can be included in at least one embodiment of the application. The phrase in various places in the description does not necessarily all refer to the same embodiment, or a separate or alternative embodiment mutually exclusive of other embodiments.

In the description of the present application, it should be noted that, unless explicitly specified and defined otherwise, the terms "mount", "couple", "connect" and "attach" should be widely understood, for example, they may be fixed connection, detachable connection, or integral connection, or may be direct connection, indirect connection via an intermediate medium, or internal communication between two elements. A person of ordinary skill in the art may understand the specific meanings of the above terms in the present application according to specific situations.

In the present application, the term "and/or" merely describes an association relation of associated objects, indicating that three relationships may exist, for example, A and/or B may indicate A alone, A and B, and B alone. In addition, the character "/" in the present application generally indicates that the preceding and following related objects thereof are in a "or" relation.

In the embodiments of the present application, the same reference numerals denote the same component, and a detailed description of the same component is omitted in different embodiments for sake of brevity. It should be understood that the size of various components, such as the thickness, length, and width, and the size of the integrated device, such as the overall thickness, length, and width, in the embodiments of the present application shown in the figures are merely illustrative and should not be construed as limiting the present application.

The term "a plurality" as used herein refers to more than two (including two).

In the embodiments of the present application, the battery cell may be a secondary battery, and the secondary battery refers to a battery cell that may be continuously used by activating an active material by charging the battery cell after discharging thereof.

The battery cell may be a lithium ion battery, a sodium ion battery, a sodium-lithium ion battery, a lithium metal battery, a sodium metal battery, a lithium-sulfur battery, a magnesium ion battery, a nickel-hydrogen battery, a nickel-cadmium battery, a lead-acid battery, or the like, without limitation for the battery cell in the embodiments of the present application.

The battery cell generally includes an electrode assembly. The electrode assembly includes a positive electrode, a negative electrode, and a spacer. During charge and discharge of the battery cell, intercalation/deintercalation of active ions (e.g., lithium ions) are enabled at the positive electrode and negative electrode by moving the active ions between the positive electrode and negative electrode. The spacer is provided between the positive electrode and the negative electrode to prevent the positive and negative electrodes from being short-circuited and to allow active ions to pass therethrough.

In some embodiments, the positive electrode and negative electrode may be a positive plate which may include a positive current collector and a positive active material disposed on at least one surface of the positive current collector.

As an example, the positive current collector has two surfaces opposite in its own thickness direction, and the positive active material is provided on either one or both of the two opposite surfaces of the positive current collector.

As an example, for the positive current collector, a metal foil or a composite current collector may be employed. For example, as the metal foil, aluminum or stainless steel which is subjected to surface treatment by silver, stainless steel, copper, aluminum, nickel, carbon electrode, carbon, nickel, titanium, or the like can be employed. The composite current collector may include a high-molecular material base layer and a metal layer. The composite current collector may be formed by forming a metal material (aluminum, an aluminum alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the positive active material may include at least one of a lithium-containing phosphate, a lithium-transition metal oxide, and respective modified compounds thereof. However, the present application is not limited to these materials, and other conventional materials that can be used as a positive active material of a battery may also be used. These positive active materials may be used alone or in a combination of two or more of the materials. Here, examples of the lithium-containing phosphate may include, but are not limited to, at least one of lithium iron phosphate (e.g., LiFePO₄, also referred to as LFP), a composite material of lithium iron phosphate and carbon, lithium manganese phosphate (e.g., LiMnPO₄), a composite material of lithium manganese phosphate and carbon, lithium ferro-manganese phosphate, and a composite material of lithium ferro-manganese phosphate and carbon. Examples of the lithium-transition metal oxide may include, but are not limited to, at least one of lithium cobalt oxide (e.g., LiCoO₂), lithium nickel oxide (e.g., LiNiO₂), lithium manganese oxide (e.g., LiMnO₂, and LiMn2O₄), lithium nickel cobalt oxide, lithium manganese cobalt oxide, lithium nickel manganese oxide, lithium nickel cobalt manganese oxide (e.g., LiNi_{1/3}, Co_{1/3}Mn_{1/3}O₂ (also referred to as NCM₃₃₃), LiNi_{0.5}Co_{0.2}Mn_{0.3}O₂ (also referred to as NCM₅₂₃), LiNi_{0.3}Co_{0.23}Mn_{0.23}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), lithium nickel cobalt aluminum oxide (e.g., LiNi_{0.85}Co_{0.15}Al_{0.05}O₂), a modified compound thereof and the like.

In some embodiments, a foamed metal may be used for the positive electrode. The foamed metal may be foamed nickel, foamed copper, foamed aluminum, foamed alloy, foamed carbon, or the like. When the foamed metal is used as the positive electrode, its surface the foamed metal may not be provided with the positive active material, and of course, the positive active material may be provided. As an example, within the foamed metal, a lithium source material, which is a lithium metal and/or a lithium-rich material, a potassium metal or a sodium metal may also be filled or/and deposited.

In some embodiments, the negative electrode may be a negative plate that may include a negative current collector.

As an example, for the negative current collector, a metal foil, a foamed metal, or a composite current collector may be employed. For example, as the metal foil, aluminum or stainless steel which is subjected to surface treatment by silver, stainless steel, copper, aluminum, nickel, carbon electrode, carbon, nickel, titanium, or the like can be employed. The foamed metal may be foamed nickel, foamed copper, foamed aluminum, foamed alloy, foamed carbon, or the like. The composite current collector may include a high-molecular material base layer and a metal layer. The composite current collector may be formed by forming a metal material (copper, a copper alloy, nickel, a nickel alloy, titanium, a titanium alloy, silver, a silver alloy, or the like) on a substrate of a high-molecular material (a substrate of polypropylene, polyethylene terephthalate, polybutylene terephthalate, polystyrene, polyethylene, or the like).

As an example, the negative plate may include a negative current collector and a negative active material provided on at least one surface of the negative current collector.

As an example, the negative current collector has two surfaces opposite in its own thickness direction, and the negative active material is provided on either one or both of the two opposite surfaces of the negative current collector.

As an example, for the negative active material, a negative active material which is known in the art for a battery cell may be used. As an example, the negative active material may include at least one of artificial graphite, natural graphite, soft carbon, hard carbon, a silicon-based material, a tin-based material, lithium titanate, and the like. The silicon-based material may be selected from at least one of elemental silicon, a silicon-oxygen compound, a silicon-carbon composite, a silicon-nitrogen composite, and a silicon alloy. The tin-based material may be selected from at least one of elemental tin, a tin oxide compound, and a tin alloy. However, the present application is not limited to these materials, and other conventional materials that can be used as a negative active material of a battery may also be used. These negative active materials may be used alone or in a combination of two or more of the materials.

In some embodiments, the material of the positive current collector may be aluminum and the material of the negative current collector may be copper.

In some implementations, the spacer is a separator. The type of the separator is not particularly limited in the application, and any known separator having a porous structure with a good chemical and mechanical stability may be used.

As an example, the main material of the separator may be selected from at least one of glass fiber, nonwoven fabric, polyethylene, polypropylene, polyvinylidene fluoride, and ceramics. The separator may be a single-layer thin film or a multilayer composite thin film, without particular limitations. When the separator is a multilayer composite thin film, the materials of the respective layers may be the same or different, without particular limitations. The spacer may be a single component located between the positive electrode and negative electrode, or may be attached to the surfaces of the positive electrode and negative electrode.

In some implementations, the spacer is a solid electrolyte. The solid electrolyte is disposed between the positive electrode and the negative electrode, and serves to transfer ions and separate the positive electrode and negative electrode.

In some implementations, the battery cell further comprises an electrolyte that functions to conduct ions between the positive electrode and negative electrode. In the present application, the type of the electrolyte is not particularly limited, and may be selected as needed. The electrolyte may be liquid, gel, or solid.

Here, a liquid electrolyte comprises an electrolyte salt and a solvent.

In some implementations, the electrolyte salt may be selected from at least one of lithium hexafluorophosphate, lithium tetrafluoroborate, lithium perchlorate, lithium hexafluoroarsenate, lithium bis (fluorosulfonyl)imide, lithium bistrifluoromethanesulfonimide, lithium trifluoromethanesulfonate, lithium difluorophosphate, lithium difluoro (oxalato) borate, lithium difluoro (oxalato) borate, lithium difluorobis(oxalato)phosphate, and lithium tetrafluoro (oxalato) phosphate.

In some implementations, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1, 4-butyrolactone, sulfolane, dimethyl sulfone, ethyl methyl sulfone, and diethyl sulfone. The solvent may also be selected from ether solvents. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1, 3-dioxolane, tetrahydrofuran, methyltetrahydrofuran, diphenyl ether, and a crown ether.

Here, a gel electrolyte comprises a backbone network using a polymer as an electrolyte, in combination with an ionic liquid - lithium salt.

Here, a solid electrolyte includes a polymer solid electrolyte, an inorganic solid electrolyte, and a composite solid electrolyte.

As an example, the polymer solid electrolyte may be polyether (polyethylene oxide), polysiloxane, polycarbonate, polyacrylonitrile, polyvinylidene fluoride, polymethyl methacrylate, a single-ion polymer, a poly-ionic liquid-lithium salt, cellulose, or the like.

As an example, the inorganic solid electrolyte may be one or more of an oxide solid electrolyte (crystalline perovskites, Na superconducting ion conductors, and garnets, amorphous LiPON thin films), a sulfide solid electrolyte (crystalline lithium-superion conductors (lithium germanium phosphorus sulfide, and argyrodite), and amorphous sulfides), and a halide solid electrolyte, a nitride solid electrolyte, and a hydride solid electrolyte.

As an example, the composite solid electrolyte is formed by adding an inorganic solid electrolyte filler in a polymer solid electrolyte.

In some implementations, the electrode assembly is a laminated structure.

As an example, a plurality of positive plates and a plurality of negative plates may be provided, and are alternately laminated.

As an example, a plurality of positive plates may be provided, the negative plate may be folded to form a plurality of laminated folding sections, and one positive plate is sandwiched between adjacent folding sections.

As an example, the positive plate and negative plate are both folded to form a plurality of laminated folding sections.

As an example, a plurality of spacers may be provided, between any adjacent positive plates or negative plates respectively.

As an example, the spacer may be continuously provided between any adjacent positive plates or negative plates by folding or winding.

In some implementations, the electrode assembly is provided with a tab that may conduct current from the electrode assembly. The tab includes a positive tab and a negative tab.

In some implementations, the battery cell may include a housing. The housing is used to enclose components such as the electrode assembly and the electrolyte. The housing may be a steel housing, an aluminum housing, a plastic housing (e.g., polypropylene), a composite metal housing (e.g., a copper-aluminum composite housing), an aluminum plastic film, or the like.

As an example, the battery cell may be a cylindrical battery cell, a prismatic battery cell, a pouch battery cell, or an another shaped battery cell, and the prismatic battery cell includes a square-housing battery cell, a blade-shaped battery cell, and a multi-prism battery cell, for example, a hexagonal battery cell, and the like, and the present application is not particularly limited.

The battery mentioned in the embodiments of the present application refers to a single physical module including one or more battery cells to provide higher voltage and capacity.

In some embodiments, the battery may be a battery module, and when there are a plurality of battery cells, the plurality of battery cells are arranged and fixed to form a battery module.

In some embodiments, the battery may be a battery pack including a box and a battery cell, and the battery cell or the battery module is accommodated in the box.

In some embodiments, the box may be a part of a chassis structure of a vehicle. For example, a part of the box may be at least a part of a floor of a vehicle, or a part of the box may be at least a part of a cross beam and a side beam of a vehicle.

In some embodiments, the battery may be an energy storage device. The energy storage device includes an energy storage container, an energy storage cabinet, and the like.

In the battery cell, the electrode assembly is generally classified into two types, a laminated type and a wound type. For a typical laminated electrode assembly, the electrode assembly may comprise a first plate and a plurality of second plates, the first plate and the second plate being of opposite polarity, the first plate being folded back and forth such that the straight sections formed by folding the first plate alternate with the second plates. In the process of molding the electrode assembly, as the number of layers of the straight sections in the first plate increases, the electrode assembly is liable to be deflected, which causes mismatch between plates, resulting in poor reliability of the electrode assembly.

In view of this, the embodiments of the present application provide an electrode assembly including a plurality of structural units, and the plurality of structural units are laminated. The structural unit comprises a first plate and a second plate of opposite polarity. The first electrode plate comprises a bending section and a plurality of straight sections, and two adjacent straight sections are spaced apart in a first direction and connected to one bent section. In the laminating direction of the plurality of structural units, the second plates alternate with the straight sections.

In such an electrode assembly, the electrode assembly is divided into a plurality of structural units, so that the number of layers of the straight sections of the first plate in the structural unit is reduced, reducing the risk of the deflection of the structural unit. During production, the first plate and the second plate can be molded into a structural unit, then a plurality of structural units are laminated together, and thus the deflection of the electrode assembly can be reduced during molding, thereby reducing the risk of misalignment between the electrode plates, so that the reliability of the electrode assembly can be improved.

The electrode assembly described in the embodiments of the present application is applicable to a battery cell, a battery, and an electric apparatus using the battery cell.

The electric apparatus may be a vehicle, a cell phone, a portable apparatus, a notebook computer, a ship, a spacecraft, an electric toy, an electric tool, etc. The vehicle may be a fuel vehicle, a gas vehicle, or a new energy vehicle which may be a pure electric vehicle, a hybrid vehicle, a range extended electric vehicle, or the like; the spacecraft includes an airplane, a rocket, a space plane, a spaceship, or the like; the electric toy includes a stationary or mobile electric toy, such as a game machine, an electric car toy, an electric ship toy, an electric airplane toy, or the like; and the electric tool includes a metal cutting electric tool, a grinding electric tool, an assembly electric tool, and an electric tool for railways, such as, an electric drill, an electric sander, an electric wrench, an electric screwdriver, an electric hammer, an impact drill, a concrete vibrator, an electric planer, or the like. In the embodiments of the present, the above described electric apparatus is not particularly limited.

To facilitate description, in the following embodiments, a vehicle is used as an example of the electric apparatus.

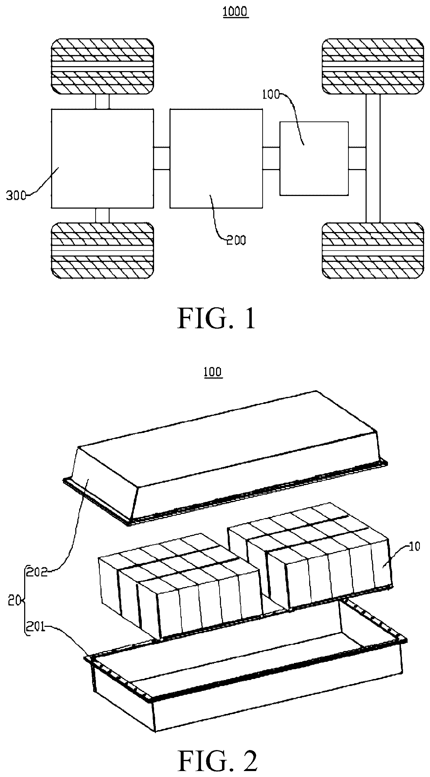

Referring to FIG. 1, FIG. 1 is a schematic structural diagram of a vehicle 1000 provided by some embodiments of the the present application. Inside the vehicle 1000, a battery 100 is provided, which may be provided at the bottom, head, or tail of the vehicle 1000. The battery 100 may be used to power the vehicle 1000, for example, the battery 100 may be used as an operating power source of the vehicle 1000.

The vehicle 1000 may also include a controller 200 and a motor 300, and the controller 200 is used to control the battery 100 to power the motor 300, for example, the power required for the vehicle 1000 during its starting, navigating, and driving.

In some embodiments of the present application, the battery 100 may be used not only as an operating power source for the vehicle 1000, but also as a driving power source for the vehicle 1000, instead of or partially instead of fuel or natural gas to provide driving power for the vehicle 1000.

Referring to FIG. 2, FIG. 2 is an exploded view of a battery 100 provided by some embodiments of the the present application. The battery 100 includes a battery cell 10 and a box 20 that accommodates the battery cell 10.

Here, the box 20, as a component that accommodates the battery cell 10, provides an accommodation space for the battery cell 10, and the box 20 may have various structures. In some embodiments, the box 20 may include a first portion 201 and a second portion 202, and the first portion 201 and the second portion 202 fit to each other to define an accommodation space for accommodating the battery cell 10. The first portion 201 and the second portion 202 may have various shapes, for example, a rectangular parallelepiped, a cylinder, etc. The first portion 201 may have a hollow structure with one open side, the second portion 202 may also have a hollow structure with one open side, and the open side of the second portion 202 fits to the open side of the first portion 201 to form the box 20 having an accommodation space. Also, the first portion 201 may have a hollow structure with one open side, the second portion 202 may have a plate-like structure, and the second portion 202 may fit to the open side of the first portion 201 to form the box 20 having an accommodation space. The first portion 201 and the second portion 202 may be sealed by a sealing element which may be a seal ring, a sealant, etc.

In the battery 100, one or more battery cells 10 may be provided. If a plurality of battery cells 10 are provided, the plurality of battery cells 10 may be subjected to series connection, parallel connection, or series-parallel connection, and the series-parallel connection means that the plurality of battery cells 10 are subjected to both series connection, and parallel connection. The plurality of battery cells 10 are subjected to series connection, or parallel connection, or series-parallel connection to form a battery module, and a plurality of battery modules are integrated by series connection, parallel connection, or series-parallel connection, and accommodated in the box 20. Also, all of the battery cells 10 are integrated by series connection, parallel connection, or series-parallel connection, and then all of the battery cells 10 are accommodated in the box 20.

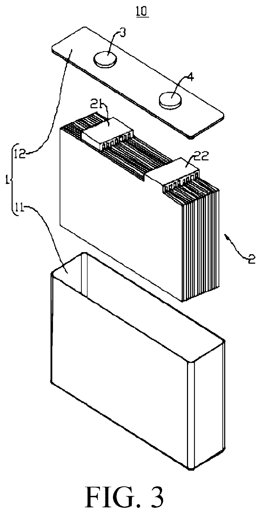

Referring to FIG. 3, FIG. 3 is an exploded view of a battery cell 10 provided by some embodiments of the present application. The battery cell 10 may include a housing 1, and an electrode assembly 2 which is received in the housing 1.

The housing 1 is used to accommodate components such as the electrode assembly 2 and an electrolyte. As an example, the housing 1 may include a casing 11 and an end cap 12. The electrolyte may be an electrolytic solution.

The casing 11 may have a hollow structure with one open end, or the casing 11 may have a hollow structure with opposite open ends. The casing 11 may have various shapes such as a cylinder, a rectangular parallelepiped, etc. The casing 11 may be made of various materials, for example, copper, iron, aluminum, steel, an aluminum alloy, etc.

The end cap 12 is a component that closes the opening of the casing 11 to insulate the internal environment of the battery cell 10 from the external environment. The end cap 12 and the casing 11 define a receiving space for accommodating the electrode assembly 2, electrolytic solution, and other components. The end cap 12 may be connected to the casing 11 by welding or rounded seam to close the opening of the casing 11. The end cap 12 may have a shape adapted to the shape of the housing 1. For example, the end cap 12 has a rectangular plate-like structure adapted to the housing 1 when the casing 11 has a rectangular parallelepiped structure, and for another example, the end cap 12 has a circular plate-like structure adapted to the casing 11 when the casing 11 has a cylinder structure. The materials for the end cap 12 may also be various, such as, copper, iron, aluminum, steel, an aluminum alloy, plastic, or the like, and the materials for the end cap 12 may be the same as or different from that for the casing 11.

In an embodiment where the casing 11 is open at one end, one end cap 12 may be provided correspondingly. In an embodiment where the casing 11 is opened at both opposite ends, two end covers 12 may be provided correspondingly, the two end covers 12 close two openings of the casing 11, and the two end covers 12 and the casing 11 define a receiving space.

In some embodiments, the battery cell 10 may further include electrode terminals provided on the housing 1, and the electrode terminals are used to electrically connect to the tabs of the electrode assembly 2 to output electric power of the battery cell 10. The electrode terminals may be provided on the casing 11 of the housing 1, or on the end cover 12 of the housing 1. The electrode terminals may be directly connected to the tabs. For example, the electrode terminal may be directly welded to the tab. The electrode terminals may be indirectly connected to the tabs. For example, the electrode terminals may be indirectly connected to the tabs by a current collecting member. The current collecting member may be a metal conductor, such as copper, iron, aluminum, steel, an aluminum alloy, or the like.

As an example, as shown in FIG. 3, an opening is formed at an end of the casing 11, one end cap 12 is provided in the housing 1, and the one end cap 12 closes the opening of the casing 11. The end cap 12 is provided with two electrode terminals, which are a positive electrode terminal 3 and a negative electrode terminal 4, and the end of the electrode assembly 2 facing the end cap 12 is formed with a positive tab 21 and a negative tab 22, the positive electrode terminal 3 is electrically connected to the positive tab 21, and the negative electrode terminal 4 is electrically connected to the negative tab 22.

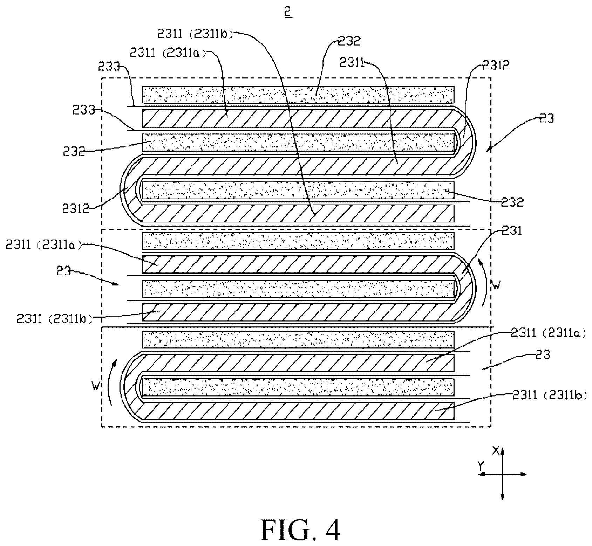

Referring to FIG. 4, FIG. 4 is a schematic structural diagram of an electrode assembly provided by some embodiments of the present application. According to a first aspect, an embodiment of the the present application provides an electrode assembly 2, where the electrode assembly 2 includes a plurality of structural units 23 laminated in a first direction X, and the structural unit 23 includes a first plate 231 and a second plate 232. The first plate 231 comprises a bending section 2312 and a plurality of straight sections 2311, two adjacent straight sections 2311 are spaced apart along the first direction X, and two adjacent straight sections 2311 are connected to one bending section 2312. The second plate 232 has a polarity opposite to that of the first plates 231, and the second plate 232 alternates with the straight sections 2311 in the first direction X.

The number of the structural units 23 in the electrode assembly 2 may be two, three, four, five or more. The first plate 231 and the second plate 232 in the structural unit 23 are opposite in polarity, and in such a case, the first plate 231 is a positive plate and the second plate 232 is a negative plate, or the first plate 231 is a negative plate and the second plate 232 is a positive plate. As an example, the structural units 23 in the electrode assembly 2 are three or more.

Here, the first plate 231 has a folded structure, and the first plate 231 is folded to form a bending section 2312 and a plurality of straight sections 2311. The straight sections 2311 are the straight portions of the first plate 231 which have not been bent, the straight sections 2311 has a thickness direction identical to the first direction X, and the plurality of straight sections 2311 of the first plate 231 are arranged in the first direction X. The number of the straight sections 2311 may be two, three, four, five or more in the first plate 231. Of course, the number of straight sections 2311 may be odd or even in the first plate 231. Regarding two adjacent structural units 23, the straight sections 2311 may be equal or unequal. The bending section 2312 is the portion of the first plate 231 which is bent, and the bending section 2312 is connected two adjacent straight sections 2311. The bending section 2312 is connected to the ends of the straight sections 2311 in a second direction Y which is perpendicular to the first direction X. The bending section 2312 may have a circular arc shape, and the bending direction W of the bending section 2312 is an extension direction of the circular arc in which the bending section 2312 is located. The bending sections 2312 may be one or more in the first plate 231. As will be understood, the first plate 231 has the straight sections 2311 which is more than the bending section 2312 by one, and if the first plate 231 has an odd number of straight sections 2311, the first plate 231 has an even number of bending sections 2312, and if the first plate 231 has an even number of straight sections 2311, the first plate 231 has an odd number of bending sections 2312. In some embodiments, there are 2-20 straight sections 2311 in the first plate 231, and further, there are 3-9 straight sections 2311 in the first plate 231. In this way, on one hand, the first electrode plate 231 can have a reduced risk of tilt during folding, and on the other hand, the first electrode plate 213 in the structural unit 23 can have a relatively good stability after being molded.

The second plate 232 may be a straight sheet-like structure, the thickness direction of the second plate 232 being identical to the first direction X. In the structural unit 23, the second plate 232 may be one or multiple, and the number of the second plates 232 may be one greater, one smaller or equal to that of the straight sections 2311 of the first plate 231. If the second plates 232 are multiple in the structural unit 23, the plurality of second plates 232 are arranged in the first direction X.

In the structural unit 23, the second plates 232 alternate with the straight sections 2311, and as an example in which the number of the second plates 232 of the structural unit 23 is equal to that of the straight sections 2311, and the number is three, the following arrangement mode may be employed: the straight section 2311 - the second plate 232 - the straight section 2311 - the second plate 232 - the straight section 2311 - the second plate 232.

It should be noted that, the second plate 232 alternates with the straight section 2311, which only indicates that the second plate 232 and the straight section 2311 are provided by an alternative arrangement mode, and does not limit no other component provided between the second plate 232 and the straight section 2311. Other components may be provided between the second plate 232 and the straight section 2311. For example, the structural unit 23 further comprises a separator 233 by which the second plate 232 is separated from the first plate 231 to achieve insulation separation of the second plate 232 from the first plate 231, and in such a case, the separator 233 is provided between the second plate 232 and the straight section 2311 of the first plate 231.

In the embodiment of the present application, the electrode assembly 2 is divided into a plurality of structural units 23, so that the number of the layers of the straight section 2311 of the first plate 231 is reduced in the structural unit 23, reducing the risk of the deflection of the structural unit 23. During production, the first plate 231 and the second plate 232 can be molded into the structural unit 23, and a plurality of structural units 23 may be laminated, so that the deflection of the electrode assembly 2 may be reduced during molding, thereby reducing the risk of misalignment between the plates, to improve the reliability of the electrode assembly 2.

In some embodiments, with continued reference to FIG. 4, at least one of the structural units 23 has the number of the straight sections 2311 of the first plate 231 which is more than two.

In such a case, one structural unit 23 has the number of the straight sections 2311 which is more than two, or a plurality of structural units 23 have the number of the straight sections 2311 which is more than two. Also, some of the structural units 23 have the number of the straight sections 2311 which is more than two, or all of the structural units 23 have the number of the straight sections 2311 which is more than two.

As an example in which the electrode assembly 2 has three structural units 23, the three structural units 23 have the number of the straight sections 2311 which is more than two; or two structural units 23 have the number of the straight sections 2311 which is more than two, and the remaining one structural unit 23 has the number of the straight sections 2311 which is two; and as shown in FIG. 4, also, two of the structural units 23 have the number of the straight sections 2311 which is two, and the remaining one structural unit 23 has the number of the straight sections 2311 which is more than two.

In the present embodiment, at least one structural unit 23 has more than two straight sections 2311, so that at least one structural unit 23 can have more straight sections 2311, thereby being able to improve the efficiency of producing the electrode assembly 2. For example, when a tab is cut out from the first plate 231 in the structural unit 23, more tabs can be cut out at a time due to the first plate 231 having more straight sections, thereby improving the efficiency of producing the electrode assembly 2.

In some embodiments, with continued reference to FIG. 4, at least one of the structural units 23 has the number of straight sections 2311 of the first plate 231 which is odd.

In the structural unit 23 having an odd number of the straight sections 2311, the straight sections 2311 may be three, five, seven or more.

In such a case, one structural unit 23 has the number of the straight sections 2311 which is odd, or a plurality of structural units 23 have the number of the straight sections 2311 which is odd. Also, some of the structural units 23 have the number of the straight sections 2311 which is odd, or all of the structural units 23 have the number of the straight sections 2311 which is odd.

As an example in which the structural units 23 are three in the electrode assembly 2, the three structural units 23 have an odd number of the straight sections 2311, or two structural units 23 have an odd number of the straight sections 2311, and the remaining one structural unit 23 has an even number of the straight sections 2311; and as shown in FIG. 4, also, two structural units 23 have an even number of the straight sections 2311, and the remaining one structural unit 23 has an odd number of the straight sections 2311.

When the first plate 231 has an odd number of the straight sections 2311, the first plate 231 has an even number of the bending sections 2312, and the structural unit has the same number of the bending sections 2312 at both sides in the second direction Y. When the first plate 231 is subjected to a force in the first direction X, the bending sections 2312 at both sides of the structural unit 23 can be deformed, the first plate 231 has a better structural stability, the difference in the amounts of deformation for both sides of structural unit 23 is reduced, and the structural unit 23 is less likely to be deflected, thereby reducing the risk of mismatch between the plates, and improving the electrode assembly 2 for the reliability.

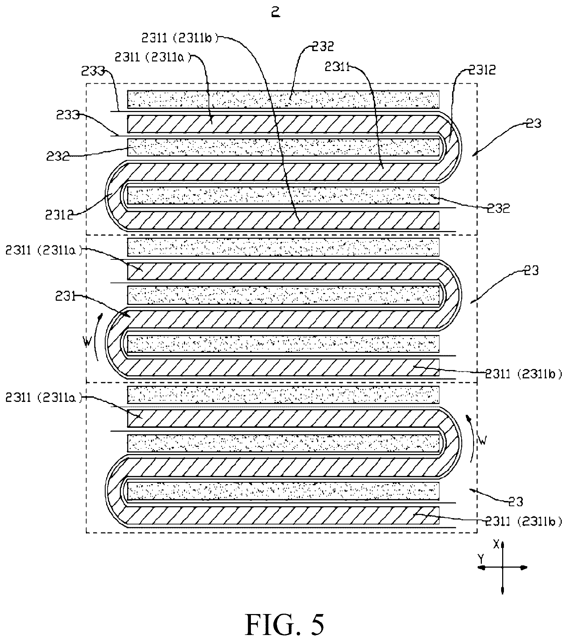

In some embodiments, referring to FIG. 5, FIG. 5 is a schematic structural diagram of an electrode assembly 2 provided by still some embodiments of the present application. Each structural unit 23 has the number of the straight sections 2311 of the first plate 231 which is more than two.

In the present embodiment, the structural unit 23 may have an odd or even number of the straight sections 2311. The straight sections 2311may be equal or unequal in two adjacent structural units 23.

In the present embodiment, each structural unit 23 has the number of the straight sections 2311 of the first plate 231 which is more than two, so that the first plate 231 in each of the structural units 23 have more straight sections 2311, and given the fixed size of the electrode assembly 2 in the first direction X, advantageously, the electrode assembly 2 has a reduced number of the structural units 23, thereby being able to further improve the efficiency of producing the electrode assembly 2.

In some embodiments, with continued reference to FIG. 5, each of the structural units 23 has the number of straight sections 2311 of the first plate 231 which is odd.

In the structural unit 23, the straight sections 2311 may be three, five, seven, or more. The straight sections 2311 may be equal or unequal in two adjacent structural units 23.

In this embodiment, each structural unit 23 has the number of the straight sections 2312 of the first plate 231 which is odd. In this way, each first plate 231 has an even number of the bending sections 2311, and each structural unit 23 has the same number of the bending sections 2312 at both sides in the direction perpendicular to the first direction X (the second direction Y) are equal. When the first plate 231 is subjected to a force in the first direction X, the bending sections 2312 at both sides of the structural unit 23 can be deformed, and the difference in the amounts of deformation for both sides of structural unit 23 is reduced, so that the first plate 231 in each structural unit 23 has a relatively good structural stability, further reducing the risk of deflection of the structural unit 23, and thereby reducing the risk of deflection of the electrode assembly 2.

In some embodiments, with continued reference to FIG. 5, the number of the straight sections 2311 of the first plate 231 is three in each structural unit 23.

If the straight sections 2311 are too many in the structural unit 23, the risk of tilting during the folding of the first plate 231 increases. However, when three straight sections 2311 are provided in each structural unit 23, on one hand, the first plate 231 can have a reduced risk of tilt during folding, and on the other hand, the first plate 231 in the structural unit 23 can have a relatively good stability after being molded, thereby reducing the risk of tilt of the electrode assembly 2.

In some embodiments, at least two structural units have unequal numbers of the straight sections 2311 of the first plates 23123.

n structural units 23 have unequal numbers of the straight sections 2311 of the first plates 231, where n ≥ 2, and it can be understood that any two structural units 23 of the n structural units 23 have unequal numbers of the straight sections 2311 of the first plates 231. Taking n = 3 as an example, that is, three structural units 23 have unequal numbers of the straight sections 2311 of the first plates 231, it can be understood that, in the three structural units 23, any two structural units 23 have unequal numbers of the straight sections 2311 of the first plates 231, for example, one structural unit 23 has two straight sections 2311 of the first plates 231, another structural unit 23 has three straight sections 2311 of the first plates 231, and the remaining one structural unit 23 has four straight sections 2311 of the first plates 231.

In this embodiment, the electrode assembly 2 has various structural units 23, and the plurality of structural units 23 can be combined in many manners, so that the electrode assembly 2 can be improved for the versatility to meet the market demand to a larger degree.

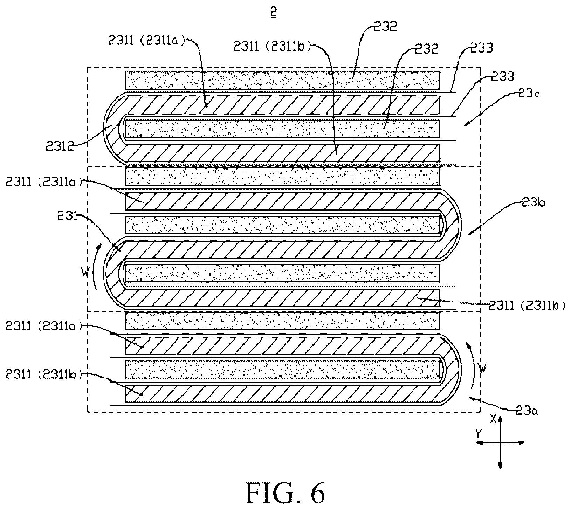

In some embodiments, referring to FIG. 6, FIG. 6 is a schematic structural diagram of an electrode assembly 2 provided by till other embodiments of the present application. The plurality of structural units 23 include a first structural unit 23a, a second structural unit 23b, and a third structural unit 23c arranged sequentially in the first direction X. Here, the first structural unit 23a and the third structural unit 23c both have an even number of the straight sections 2311 of the first plate 231, and the second structural unit 23b has an odd number of the straight sections 2311 of the first plate 231.

The first structural unit 23a, the second structural unit 23b, and the third structural unit 23c are adjacent three structural units 23 in the plurality of structural units 23. The electrode assembly 2 may have three structural units 23, and the three structural units 23 are the first structural unit 23a, the second structural unit 23b, and the third structural unit 23c; and the electrode assembly 2 may have more than three structural units 23, wherein three structural units 23 arranged continuously are the first structural unit 23a, the second structural unit 23b, and the third structural unit 23c.

The first structural unit 23a and the third structural unit 23c both have an even number of the straight sections 2311, such as, two, four, six, eight, or more. The first structural unit 23a and the third structural unit 23c have the same number of the straight sections 2311, or have different numbers of the straight sections 2311. The second structural unit 23 has an add number of the straight sections 2311, such as, three, five, seven, nine, or more.

As an example, as shown in FIG. 6, the first structural unit 23a and the third structural unit 23c both have two straight sections 2311, and the second structural unit 23b has three straight sections 2311. The first structural unit 23a and the third structural unit 23c have the first plate 231 with a substantially "U"-shaped structure, and the second structural unit 23b has the first plate 231 with a substantially "S"-shaped structure.

In this embodiment, the second structural unit 23b in the middle has an odd number of the straight sections 2311, the first structural unit 23a and the third structural unit 23c located at both sides of the second structural unit 23b respectively have an even number of the straight sections 2311, and the second structural unit 23b has the same number of the bending sections 2312 at both sides in the direction perpendicular to the first direction X (the second direction Y), and when the combined structure formed by the first structural unit 23a, second structural unit 23b, and third structural unit 23c is subjected to a force in the first direction X, the combined structure enables a relatively small difference between the deformation amounts of both sides in the direction perpendicular to the first direction X, so that the combined structure has better structural stability and is less likely to be deflected.

In some embodiments, referring to FIGS. 4-6, in the first direction X, the two straight sections 2311 located at both ends of the first plate 231 are a first straight section 2311a and a second straight section 2311b, respectively. In two adjacent structural units 23, the first straight section 2311a of one structural unit 23 and the second straight section 2311b of the other one structural unit 23 are two adjacent straight sections 2311, and in the second direction Y, an end, far away from the bending section 2312, of the first straight section 2311a of one structural unit 23 and an end, far away from the bending section 2312, of the second straight section 2311b of the other structural unit 23 are located at both sides of the electrode assembly 2, respectively, and the second direction Y is perpendicular to the first direction X.

Two of the first direction X, the second direction Y and the width direction Z of the first plate are perpendicular to each other.

The first straight section 2311a and the second straight section 2311b are the straight sections 2311 at both ends of the first plate 231 in the first direction X, respectively. It will be understood that if the first plate 231 has two straight sections 2311, they are the first straight section 2311a and the second straight section 2311b. In the second direction Y, an end, away from the bending section 2312, of the first straight section 2311a of one structural unit 23 and an end, away from the bending section 2312, of the second straight section 2311b of another structural unit 23 are located at both sides of the electrode assembly 2, respectively, and it can be understood that the bending section connected to the first straight section 2311a of one structural unit 23 and the bending section 2312 connected to the second straight section 2311b of another structural unit 23 are located at both sides of the electrode assembly 2, respectively.

In two adjacent structural units 23, a second plate 232 may be provided between the first straight section 2311a of one structural unit 23 and the second straight section 2311b of the other structural unit 23.

Taking the embodiment shown in FIG. 6 as an example, the first structural unit 23a and the second structural unit 23b are two adjacent structural units 23, and in the second direction Y, an end, away from the bending section 2312, of the first straight section 2311a of the first structural unit 23a, and an end, away from the bending section 2312, of the second straight section 2311b of the second structural unit 23b are located at both sides of the electrode assembly 2, respectively. Also, the second structural unit 23b and the third structural unit 23c are two adjacent structural units 23, and in the second direction Y, an end, away from the bending section 2312, of the first straight section 2311a of the second structural unit 23b and an end, away from the bending section 2312, of the second straight section 2311b of the third structural unit 23c are located at both sides of the electrode assembly 2, respectively.

In this embodiment, the electrode assembly 2 has two adjacent bending sections, which are not too far apart or too close, at each side in the second direction Y, so as to enable a relatively rational layout, so that the electrode assembly 2 has a better structural stability, thereby further reducing the risk of deflection.

In some embodiments, with continued reference to FIGS. 4-6, in the structural unit 23, the number of straight sections 2311 of the first plate 231 is equal to the number of second plates 232.

Taking the embodiment shown in FIG. 6 as an example, the first structural unit 23a has two straight sections 2311 and two second plates 232, the second structural unit 23b has three straight sections 2311 and three second plates 232, and the third structural unit 23c has two straight sections 2311 and two second plates 232. In this way, the second plate 232 is arranged between the first straight section 2311a of the first structural unit 23a and the second straight section 2311b of the second structural unit 23b, and the second plate 232 is also arranged between the first straight section 2311a of the second structural unit 23b and the second straight section 2311b of the third structural unit 23c.

In the embodiment, the straight sections 2311 correspond to the second plates 232 one by one in the structural units 23, so that the straight sections 2311 and the second plates 232 in two adjacent structural units 23 are alternately arranged, so that in two adjacent structural units 23, in the first direction X, the top plate of one structural unit 23 located at the bottom is opposite in polarity to the bottom plate of one structural unit 23 located at the top, so that the straight sections 2311 and the second plates 232 of the two adjacent structural units 23 are fully utilized, facilitating to increase the capacity of the battery cell 10.

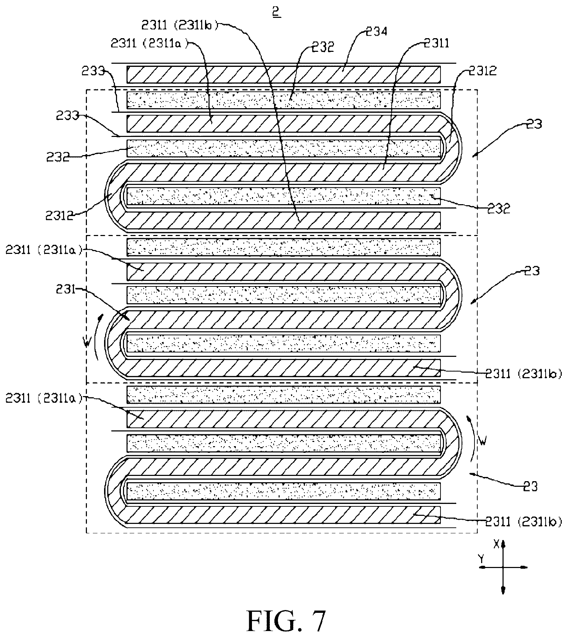

In some embodiments, referring to FIG. 7, FIG. 7 is a schematic structural diagram of an electrode assembly 2 provided by till other embodiments of the present application. The electrode assembly 2 further comprises a third plate 234, the third plate 234 being of the same polarity as the first plate 231. In the first direction X, the third plate 234 is provided at least one side of the plurality of structural units 23, and the third plate 234 is adjacent to the second plate 232 of an adjacent structural unit 23.

The third plate 234 may be a straight sheet-like structure, and the thickness direction of the third plate 234 is identical to the first direction X. Since the third plate 234 has the polarity the same as that of the first plate 231, the third plate 234 has the polarity opposite to that of the second plate 232. It can be understood that, if the second plate 232 is a negative plate, the third plate 234 is a positive plate; and if the second plate 232 is a positive plate, the third plate 234 is a negative plate.

In the electrode assembly 2, the number of the third plates 234 may be one or two. If the third plate 234 is provided at only one side of the plurality of structural units 23 in the first direction X, the number of the third plate 234 is one, and the third plate 234 is the outermost plate of the electrode assembly 2 in the first direction X. If the third plate 234 is provided at both sides of the plurality of structural units 23 in the first direction X, the number of the third plates 234 in the electrode assembly 2 is two, all the structural units 23 are located between the two third plates 234, and the two third plates 234 are the two outermost plates of the electrode assembly 2 in the first direction X.

The third plate 234 is adjacent to a second plate 232 of an adjacent structural unit 23, which means the third plate 234 and the second plate 232 of the adjacent structural unit 23 being two adjacent plates, and other component therebetween is not limited herein. The third plate 234 may be separated from the adjacent second plate 232 by a separator 233. The second plate 232 adjacent to the third plate 234 is the outermost second plate 232 in the structural unit 23 located at the end of the electrode assembly 2 in the first direction X.

In this embodiment, it is possible to fully utilize the outermost second plate 232 of the structural unit 23 located at the end of the electrode assembly 2, so that the outermost second plate 232 of the structural unit 23 located at the end of the electrode assembly 2 can transfer metal ions along with the third plate 234 during charging and discharging of the battery cell 10, thereby facilitating to increase the capacity of the battery cell 10.

In some embodiments, referring to FIGS. 4-7, the first plate 231 is a negative plate and the second plate 232 is a positive plate. In this way, it is easier to cover the positive plate with the negative plate, and to reduce the risk of protruding the positive plate beyond the negative plate, thereby improving the reliability of the electrode assembly 2. Taking the battery cell 10 which is the lithium-ion battery 100 as an example, the risk of lithium plating be can be reduced by covering the negative plate with the positive plate, thereby improving the reliability of the electrode assembly 2.

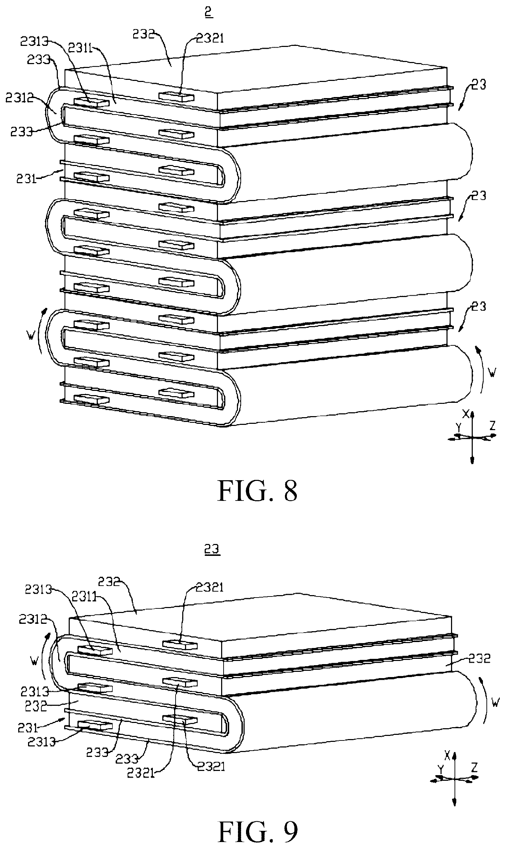

In some embodiments, referring to FIGS. 8 and 9, FIG. 8 is an axonometric view of an electrode assembly 2 provided by some embodiments of the the present application, and FIG. 9 is an axonometric view of a structural unit 23 shown in FIG. 8. Each straight section 2311 is provided with a first tab 2313, and a plurality of first tabs 2313 in each structural unit 23 are aligned along the first direction X, and/or each second plate 232 is provided with a second tab 2321, and each structural unit 23 includes a plurality of second plates 232, and the plurality of second tabs 2321 in each structural unit 23 are aligned along the first direction X.

If the plurality of first tabs 2313 in each structural unit 23 are aligned along the first direction X, the first tabs 2313 in two adjacent structural units 23 may also be aligned along the first direction X, and the first tabs 2313 in the plurality of structural units 23 may be connected together to form a first tab portion. If the plurality of second tabs 2321 in each structural unit 23 are aligned along the first direction X, the second tabs 2321 in two adjacent structural units 23 may also be aligned along the first direction X, and the second tabs 2321 in the plurality of structural units 23 may be connected to form a second tab portion. Here, one of the first tab portion and the second tab portion forms a positive tab 21 of the electrode assembly 2, and the other forms a negative tab 22 of the electrode assembly 2.

If the plurality of first tabs 2313 in the structural unit 23 are aligned in the first direction X to facilitate the bus connection, the entire structural unit 23 can be cut when the first tabs 2313 are cut, thereby improving efficiency of the cutting the first tabs 2313 and improving the production efficiency; and if the plurality of second tabs 2321 in the structural unit 23 are aligned in the first direction X to facilitate bus connection, the entire structural unit 23 can be cut when the second tabs 2321 are cut, thereby improving the efficiency of cutting the second tabs 2321 and improving the production efficiency.

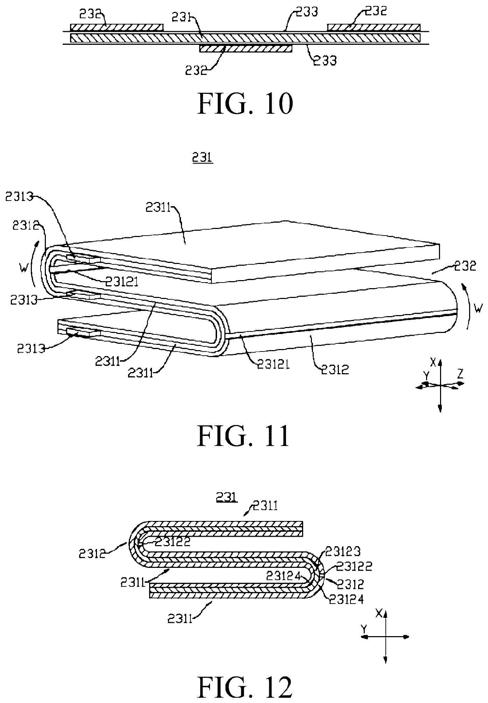

In some embodiments, with continued reference to FIGS. 9 and 10, FIG. 10 is a schematic structural view of the structural unit 23 shown in FIG. 9 after unfolding. The structural unit 23 further comprises a separator 233, the first plate 231 and the second plate 232 each are joined to the separator 233, and the separator 233 is configured to separate the first plate 231 and the second plate 232.

The separators 233 may be provided at both sides of the first plate 231 to separate the first plate 231 from the second plates 232 at both sides. The separator 233 is joined to the first plate 231, such that the separator 233 is fixed to the first plate 231. The second plate 232 is joined to the separator 233, such that the second plate 232 is fixed to the separator 233. The first plate 231 and the second plate 232 may be joined to the separator 233 in various manners, for example, both the first plate 231 and the second plate 232 are bonded or thermally fused to the separator 233.

The separators 233 may be joined to both sides of the first plate 231 when molding the structural unit 23, then, the separators 233 at both sides of the first plate 231 may be joined alternately to the second plates 232, and the first plate 231 is folded back and forth, so as to finally alternate the straight sections 2311 of the first plate 231 and the second plates 232, thereby efficiently molding the structural unit 23.

The separator 233 realizes insulation separation between the first plate 231 and the second plate 232, reducing the risk of internal short circuit of the electrode assembly 2. The first plate 231 and the second plate 232 are joined to the separator 233, so that the first plate 231, the second plate 232, and the separator 233 in the structural unit 23 are well integrated, to reduce the risk of misalignment between the first plate 231 and the second plate 232.

In some embodiments, referring to FIG. 11, FIG. 11 is an axonometric view of a first plate 231 provided by some embodiments of the present application. The bending section 2312 is provided with a guide portion 23121 configured to guide bending of the bending section 2312.

The guide portion 23121 is a structure to guide bending of the bending section 2312, so that the first plate 231 is bent at a predetermined position to form the bending section 2312. The guide portion 23121 may be structure such as a groove, a hole or the like provided in the bending section 2312 as long as it can guide the first plate 231 to be bent at a predetermined position to form the bending section 2312 during folding. In the bending direction W of the bending section 2312, the guide portion 23121 may be located in the middle of the bending section 2312.

By the guide portion 23121, the first plate 231 can be bent at an indicated position, and thus, the efficiency of folding the first plate 231 is increased, the consistency of the folding positions is higher, the position of the straight section 2311 relative to the second plate 232 is more accurate, and the reliability of the electrode assembly 2 is ensured.

In some embodiments, with continued reference to FIG. 11, the guide 23121 includes a groove 23122 provided in the bending section 2312.

The groove 23122 may be one or multiple in the guide portion 23121. If there is one groove 23122 in the guide portion 23121, the groove 23122 may extend in the width direction Z of the first plate. If the grooves 23122 are multiple in the guide portion 23121, the grooves 23122 may be arranged at intervals in the width direction Z of the first plate. Here, two of the width direction Z of the first plate, the first direction X and the second direction Y are perpendicular to each other.

In this embodiment, the bending section 2312 is weaker in the region where the grooves 23122 are provided, and the grooves 23122 have a good guiding effect, so that the first plate 231 is more easily bent at the positions of the grooves 23122 to correspondingly form the bending section 2312. Such a guide portion 23121 has a simple structure and can be easily molded. Additionally, the provision of the grooves 23122 can improve lithium plating at the bending portion of the first plate 231, thereby improving the service life of the electrode assembly 2.

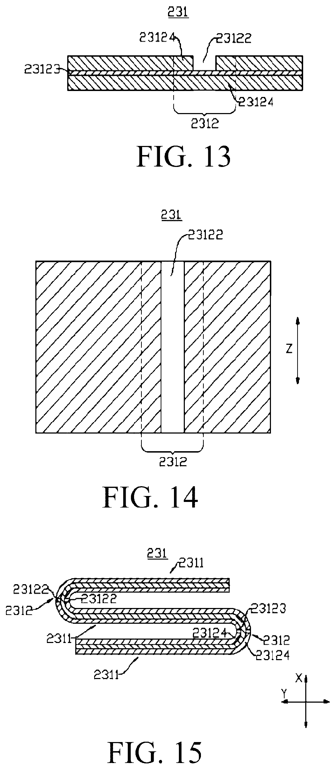

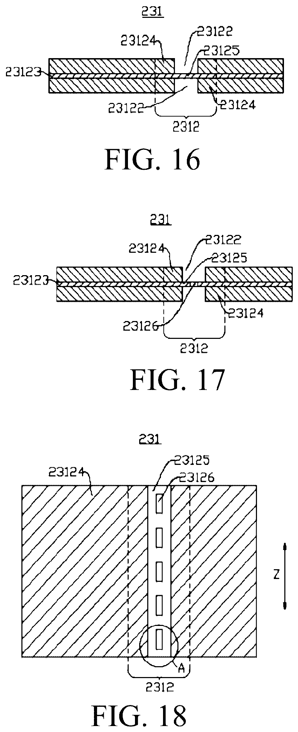

In some embodiments, referring to FIGS. 12-16, FIG. 12 is a schematic structural view of a first plate 231 provided by some embodiments of the present application; FIG. 13 is a partial view of the first plate 231 shown in FIG. 12 after unfolding; FIG. 14 is a top view of the first plate 231 shown in FIG. 13; FIG. 15 is a schematic structural diagram of a first plate 231 provided by still some embodiments of the present application; and FIG. 16 is a partial view of the first plate 231 shown in FIG. 15 after unfolding. The bending section 2312 includes a current collector 23123 and two active material layers 23124, the two active material layers 23124 are provided on both sides of the current collector 23123, respectively, and at least one of the active material layers 23124 is provided with the grooves 23122.

In such a case, one or both of the two active material layers 23124 are provided with the grooves 23122. The grooves 23122 may have the depth smaller than or equal to the thickness of the active material layer 23124.

In the present embodiment, by providing the grooves 23122 in at least one layer of the active material layers 23124 of the bending section 2312, a part of the bending section 2312 can be thinned and weakened, and such an implementation is simple.

In some embodiments, with continued reference to FIGS. 12-14, one active material layer 23124 is provided with the grooves 23122.

In the bending section 2312, the grooves 23122 may be provided in the active material layer 23124 located inside or outside the current collector 23123. Taking the bending section 2312 which has an arc shape as an example, the radius of the active material layer 23124 located outside the current collector 23123 is larger than the radius of the active material layer 23124 located inside the current collector 23123. As an example, in the embodiments shown in FIGS. 12-14, the grooves 23122 extend in the width direction Z of the first plate and passes through the active material layer 23124.

In the present embodiment, the grooves 23122 are provided in only one active material layer 23124, thereby reducing the difficulty for molding the first plate 231. In particular, when the grooves 23122 are provided in only one active material layer 23124, and the first plate 231 is bent for more than two twice, some of the grooves 23122 are located inside the bending section 2312, and some of the groove 23122 are located outside the bending section 2312, so that first plate 231 can be controlled for lithium plating while reducing its molding difficulty. Also, when the grooves 23122 are provided in only one active material layer 23124, all of the grooves 23122 are located at the same side of the first plate 231 when the first plate 231 is unfolded; and with respect to the process for positioning and alignment for the grooves 23122 at both sides, the process for providing grooves at one side is less difficult with more convenient operations.

In some embodiments, with continued reference to FIGS. 15 and 16, the grooves 23122 are provided in two active material layers 23124.

The grooves 23122 are provided in the two active material layers 23124 in a corresponding mode. For example, the bending section 2312 has a circular arc shape, the grooves 23122 in the two active material layers 23124 are located in the same radial direction of the bending section 2312, and in the radial direction of the bending section 2312, the grooves 23122 in the two active material layers 23124 are located at both sides of the current collector 23123, respectively. Here, the grooves 23122 extend in the width direction Z of the first plate and pass through the active material layer 23124.

In the example in which the grooves 23122 has the depth equal to the thickness of the active material layer 23124, since the grooves 23122 are provided in the two active material layers 23124, the current collector 23123 is not covered with the active material layer 23124 in the region where the grooves 23122 are provided, and the region is bare, and is the inactive material layer region 23125 of the current collector 23123.

In the present embodiment, the grooves 23122 are provided in the active material layers 23124 at both sides of the current collector 23123, so that the bending section 2312 is weaker in the region where the grooves 23122 are provided and is more easily bent. Also, the first plate 231 can also be improved for the lithium plating.

In some embodiments, referring to FIG. 17, FIG. 17 is a partial view of the first plate 231 provided by still some embodiments of the present application. The guide portion 23121 further includes a through hole 23126 passing through the current collector 23123, the region where the current collector 23123 corresponds to the grooves 23122 forms an inactive material layer region 23125 in which the through hole 23126 is provided.

In the present embodiment, the groove 23122 has the depth equal to the thickness of the active material layer 23124, so that the current collector 23123 is not covered with the active material layer 23124 in the region where the groove 23122 is provided to correspondingly form the non-active material layer region 23125.

The through hole 23126 provided in the inactive material layer region 23125 may be one or multiple. The through hole 23126 may have various shapes, such as, a circular shape, a rectangular shape, etc. In the width direction of the inactive material layer 23124, the through hole 23126 may be provided in the middle of the inactive material layer 23124. Here, the width direction of the inactive material layer 23124 is perpendicular to the width direction Z of the first plate and the thickness direction of the current collector 23123.

In the present embodiment, the provision of the through hole 23126 reduces the rigidity of the inactive material layer region 23125 of the current collector 23123, and the folding effect is enhanced by reducing the rigidity of the inactive material layer region 23125, further improving the efficiency of folding the first plate 231. In addition, through the through hole 23126, an electrolyte can flow between the first plate 231 and the second plate 232 in the battery cell 10, thereby facilitating to soak the plates by the electrolyte. Also, the first plate 231 can also be improved for the lithium plating.

In some embodiments, referring to FIG. 18, FIG. 18 is a top view of the first plate 231 shown in FIG. 17. A plurality of through holes 23126 are provided in the inactive material layer region 23125, and are provided at intervals in the width direction Z of the first plate.

The through holes 23126 in the inactive material layer region 23125 may be two, three, four, five, or more.

In the present embodiment, a plurality of through holes 23126, which are arranged in the width direction Z of the first plate, are provided in the inactive material layer region 23125, further reducing the rigidity of the current collector 23123 in the inactive material layer region 23125, so that the first plate 231 is more easily bent in the inactive material layer region 23125.

In some embodiments, with continued reference to FIGS. 14 and 18, the grooves 23122 extend in the width direction Z of the first plate and pass through the active material layer 23124.

It can be understood that, in the width direction Z of the first plate, both ends of the grooves 23122 extend to both ends of the active material layer 23124, respectively.

It should be noted that the grooves 23122 may extend in the first direction X and pass through the active material layer 23124, regardless of whether the grooves 23122 are provided only in the active material layer 23124 at one side of the current collector 23123, or the grooves 23122 are provided in the active material layers 23124 at both sides of the current collector 23123.

In this embodiment, the grooves 23122 are more easily molded and the first plate 231 is more easily bent in the region of the grooves 23122.

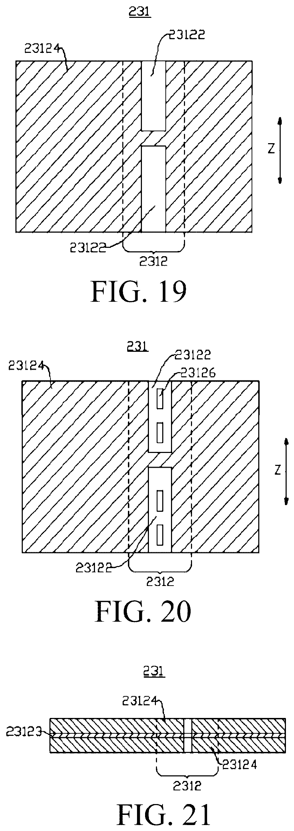

Referring to FIGS. 19 and 20, FIG. 19 is a top view of a first plate 231 provided by some embodiments of the present application; and FIG. 20 is a top view of a first plate 231 provided by still some embodiments of the present application. A plurality of grooves 23122 are provided in the active material layer 23124 and are provided at intervals in the width direction Z of the first plate.

The grooves 23122 provided in the active material layer 23124 may be two, three, four, five, or more. It can be understood that, in the embodiment in which the grooves 23122 are provided in only one active material layer 23124 located at one side of the current collector 23123, the active material layer 23124 is provided with the plurality of grooves 23122; and in the embodiment in which the grooves 23122 are provided in two active material layers 23124 located at both sides of the current collector 23123, each active material layer 23124 is provided with a plurality of grooves 23122.

In the example shown in FIG. 19, the region in which the current collector 23123 corresponds to the grooves 23122 forms the inactive material layer region 23125 (not shown in FIG. 19), and the inactive material layer region 23125 is not provided with the through hole 23126. In the embodiment shown in FIG. 20, the region in which the current collector 23123 corresponds to the grooves 23122 forms an inactive material layer region 23125 (not shown in FIG. 20), and the inactive material layer region 23125 is provided with the through hole 23126.

In the present embodiment, the active material layer 23124 is provided with the plurality of grooves 23122 arranged at intervals in the width direction Z of the first plate, the first plate 231 has a good bending property in the region of the plurality of grooves 23122, and the first plate 231 has a sufficient strength in the region, with a less risk of breakage.

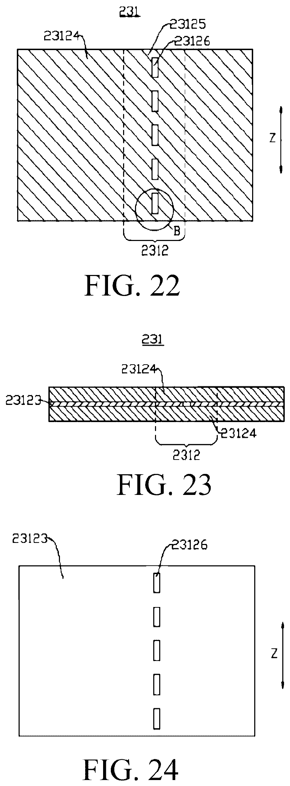

In some embodiments, referring to FIGS. 21-24, FIG. 21 is a partial view of a first plate 231 provided by other some embodiments of the present application after unfolding; FIG. 22 is a top view of the first plate 231 shown in FIG. 21; FIG. 23 is a partial view of a first plate 231 provided by still other embodiments of the present application after unfolding; and FIG. 24 is a top view of the current collector 23123 shown in FIG. 23. The bending section 2312 includes a current collector 23123 and two active material layers 23124, and the two active material layers 23124 are provided at both sides of the current collector 23123, respectively, and a guide portion 23121 includes a through hole 23126 provided in the bending section 2312. The through hole 23126 passes through the current collector 23123 and the two active material layers 23124, or the through hole 23126 passes through the current collector 23123 and the two active material layers 23124 cover the through hole 23126.

The through holes 23126 provided in the bent section 2312 may be one or multiple. The through hole 23126 may have various shapes, such as, a circular shape, a rectangular shape, etc.

In the embodiments shown in FIGS. 21 and 22, the through hole 23126 passes through the current collector 23123 and the two active material layers 23124. In the embodiments shown in FIGS. 23 and 24, the through hole 23126 is provided in the current collector 23123, the through hole 23126 passes through the current collector 23123, and both the active material layers 23124 cover the through hole 23126.

In this embodiment, the region of the bending section 2312 in which the through hole 23126 is provided has a reduced rigidity, so that the first electrode plate 231 is more easily bent at the through hole 23126 to correspondingly form the bending section 2312. If the through hole 23126 passes through the current collector 23123 and the two active material layers 23124, the bending property of the first plate 231 is improved in the region where the through hole 23126 is provided. In addition, through the through hole 23126, an electrolyte can flow between the first plate 231 and the second plate 232 in the battery cell 10, thereby facilitating to soak the plates by the electrolyte. If the through hole 23126 passes through the current collector 23123 and the two active material layers 23124 cover the through hole 23126, the first plate 231 has a sufficient strength in the region where the through hole 23126 is provided, with a less risk of breakage during bending of the first plate 231. Additionally, when the first plate 231 is molded, the through hole 23126 may be formed in the current collector 23123, and the active material layer 23124 may be provided on the surface of the current collector 23123, so that the active material layer 23124 covers the through hole 23126, thereby reducing the difficulty in molding the first plate 231.

In some embodiments, with continued reference to FIGS. 22 and 24, the guide 23121 comprises a plurality of through holes 23126 spaced apart along the width direction Z of the first plate.

The through holes 23126 in the bending section 2312 may be two, three, four, five or more.

In the present embodiment, the plurality of through holes 23126 are provided in the bending section 2312, and arranged in the width direction Z of the first plate, further reducing the rigidity of the region of the bending section 2312 where the through holes 23126 are provided, so that the first plate 231 is more easily bent in the region where the through holes 23126 are provided.

In some embodiments, the through hole 23126 is a rectangular hole.

The through hole 23126 has a rectangular cross section perpendicular to the axial direction of the through hole 23126, and the axial direction of the through hole 23126 is identical to the thickness direction of the bending section 2312.

In the present embodiment, the through hole 23126 is a rectangular hole, and the through hole 23126 has a simple structure and can be easily formed.

In some embodiments, referring to FIGS. 18, 20, 22 and 24, the cross section of the through hole 23126 is a rectangle which has the length direction identical to the width direction Z of the first plate.

The length direction of the rectangle is the length direction of the through hole 23126, and in the rectangle, the long side is longer than the short side.

In the present embodiment, the length direction of the through hole 23126 is identical to the width direction Z of the first plate, so that the folding position of the first plate 231 is more accurate.

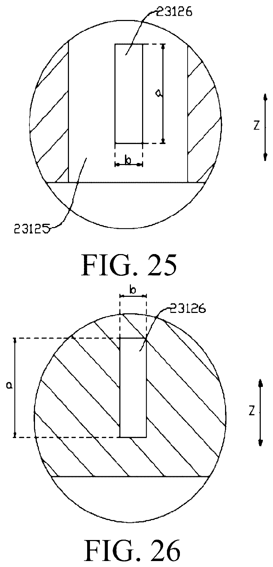

In some embodiments, referring to FIG. 25, FIG. 25 is a partially enlarged view of A in FIG. 18; and FIG. 26 is a partially enlarged view of B in FIG. 22. The rectangle has a length of a, and a width of b, where 10 ≤ a/b ≤ 400.
a/ b may be a point value of any one of or a range value between any two of 10, 20, 40, 80, 100, 150, 180, 200, 250, 280, 300, 350, 380, 400.

When a/b <10, the through hole 23126 has a relatively large size in the bending direction W of the bending section 2312, the first plate 231 has a relatively poor folding consistency in the region of the through hole 23126, thereby affecting the folding accuracy of the first plate 231; and when a/b> 400, the through hole 23126 has a relatively small size in the bending direction W of the bending section 2312, and the through hole 23126 has a relatively weak ability to guide the bending of the first plate 231, thereby also affecting the folding accuracy of the first plate 231. Therefore, when 10 ≤ a/b ≤ 400, the through hole 23126 is an elongated structure extending in the width direction Z of the first plate, the first plate 231 has the folding position with an improved consistency, so that the folding position of the first plate 231 is more accurate, to improve the efficiency of folding the first plate 231.

In some embodiments, 20 ≤ a/b ≤ 100.
a/b may be a point value of any one of or a range value between any two of 20, 30, 40, 50, 60, 70, 80, 90, and 100.

In the present embodiment where 20 ≤ a/b ≤ 100, the efficiency of folding the first plate 231 can be further improved.

In some embodiments, 3 mm ≤ a ≤ 20 mm and/or 0.05 mm ≤ b ≤ 0.3 mm.
a may be a point value of any one of or a range value of any two of 3 mm, 4 mm, 5 mm, 6 mm, 7 mm, 8 mm, 9 mm, 10 mm, 11 mm, 12 mm, 13 mm, 14 mm, 15 mm, 16 mm, 17 mm, 18 mm, 19 mm, and 20 mm.
b may be a point value of any one of or a range value of any two of 0.05 mm, 0.08 mm, 0.1 mm, 0.12 mm, 0.15 mm, 0.18 mm, 0.2 mm, 0.22 mm, 0.25 mm, 0.28 mm, and 0.3 mm.

The embodiment of the present application provides a battery cell 10 comprising a housing 1 and the electrode assembly 2 provided in any one of the above embodiments, wherein the electrode assembly 2 is accommodated in the housing 1.

The embodiment of the present application provides a battery 100 comprising the battery cell 10 provided in any one of the above embodiments.

The embodiment of the present application provides an electric apparatus comprising the battery cell 10 provided in any one of the above embodiments, wherein the battery cell 10 is used to provide electrical energy.

The embodiment of the present application also provides an electrode assembly 2 comprising a plurality of structural units 23 laminated in a first direction X, the structural units 23 comprise a first plate 231, a second plate 232, and a separator 233, the separator 233 is joined to both sides of the first plate 231, the second plate 232 is joined to the separator 233, and the separator 233 is configured to separate the first plate 231 and the second plate 232. The first plate 231 has a folded structure, and the first plate 231 includes a bending section 2312 and a plurality of straight sections 2311, two adjacent straight sections 2311 being spaced apart from each other in the first direction X and connected to one bending section 2312. The first plate 231 is a negative plate, the second plate 232 is a positive plate, and the second plate 232 alternates with the straight sections 2311 in the first direction X. In the structural unit 23, the number of the straight sections 2311 of the first plate 231 is equal to the number of the second plate 232.

Here, the number of the straight sections 2311 of the first plate 231 is odd in at least one structural unit 23, and the numbers of the straight sections 2311 of the first plate 231 are unequal in at least two structural units 23.

The bending section 2312 is provided with a groove 23122 configured to guide bending of the bending section 2312. The bending section 2312 includes a current collector 23123 and two active material layers 23124, the two active material layers 23124 are provided at both sides of the current collector 23123, respectively, the two active material layers 23124 are each provided with the groove 23122, the region where the current collector 23123 corresponds to the groove 23122 forms an inactive material layer region 23125, the inactive material layer region 23125 is provided with a plurality of through holes 23126, and the plurality of through holes 23126 are provided at intervals in the width direction Z of the first plate. The cross-section of the through hole 23126 is a rectangle, and the length direction of the rectangle is identical to the width direction Z of the first plate. The rectangle has a length of a and a width of b, where 10 ≤ a/b ≤ 4003 mm ≤ a ≤ 20 mm and 0.05 mm ≤ b ≤ 0.3 mm.

In the above solution, the electrode assembly 2 is divided into a plurality of structural units 23, so that the number of the layers of the straight section 2311 of the first plate 231 is reduced in the structural unit 23, reducing the risk of the deflection of the structural unit 23. It is possible to reduce the risk of deflection after the plurality of structural units 23 are laminated, thereby reducing the risk of mismatch between the plates, so that the reliability of the electrode assembly 2 is improved. At least one structural unit 23 has an odd number of the straight sections 2312 of the first plate 231, so that the structural unit 23 has the same number of the bending sections 2311 at both sides in the second direction Y; and when the first plate 231 is subjected to a force in the first direction X, the bending sections 2312 at both sides of the structural unit 23 can be deformed, the first plate 231 has a better structural stability, and the structural unit 23 is less likely to be deflected, thereby reducing the risk of mismatch between the plates, and improving the electrode assembly 2 for the reliability. At least two structural units 23 have different numbers of the straight sections 2311 of the first plate 231, so that the structural units 23 in the electrode assembly 2 are various, and the plurality of structural units 23 can be combined in various ways, so that the electrode assembly 2 can be improved for the versatility to meet the market demand to a larger degree. In addition, the groove 23122 is provided in the two active material layers 23124 of the bending section 2312 provided, so that the first plate 231 is more easily bent at the positions of the groove 23122, so as to guide the bending of the first plate 231, thereby improving the efficiency of folding the first plate 231, and improve the consistency of the folding position. Since the plurality of through holes 23126 are provided at intervals in the non-active material layer region 23125 of the current collector 23123, the rigidity of the current collector 23123 in the non-active material layer region 23125 can be reduced, so that the first plate 231 can be more easily bent in the non-active material layer region 23125, and the first plate 231 can be improved for lithium plating. Furthermore, since the through hole 23126 has a cross section which is a rectangle, the length direction of the rectangle is identical to the width direction Z of the first plate, and the length a and the width b of the rectangle satisfy: 10 ≤ a/b ≤ 400, the through hole 23126 is an elongated structure extending in the width direction Z of the first plate, improving the consistency of the folding position of the first plate 231, so that the folding position of the first plate 231 is more accurate to improve the efficiency of folding the first plate 231.

It should be noted that, without contradictory, the embodiments in the present application may be combined with the features in the embodiments.

The above embodiments merely illustrate the technical solutions of the present application and are not intended to limit the present application, and it is obvious to those skilled in the art that the present application may have various modifications and variations. Any modifications, equivalent replacements, improvements and the like within the spirit and principle of the present application shall be included in the protection scope of the present application.

## Claims

1. An electrode assembly comprising a plurality of structural units laminated in a first direction, the structural unit comprising:
a first plate comprising a bending section and a plurality of straight sections, wherein two adjacent straight sections are spaced apart in a first direction and connected to one bending section;
and a second plate having a polarity opposite to that of the first plate, wherein the second plate alternates with the straight sections in the first direction.

2. The electrode assembly according to claim 1, wherein at least one of the structural units has the number of the straight sections of the first plate which is more than two.

3. The electrode assembly according to claim 1 or 2, wherein at least one of the structural units has the number of the straight sections of the first plate which is odd.

4. The electrode assembly according to any one of claims 1-3, wherein each of the structural units has the number of the straight sections of the first plate which is more than two.

5. The electrode assembly according to any one of 1-4, wherein each of the structural units has the number of the straight sections of the first plate which is odd.

6. The electrode assembly according to claim 4 or 5, wherein each of the structural units has the number of the straight sections of the first plate which is three.

7. The electrode assembly according to any one of claims 1-3, wherein at least two of the structural units have unequal numbers of the straight sections of the first plate.

8. The electrode assembly according to any one of claims 1-3 and 7, wherein the plurality of structural units comprises a first structural unit, a second structural unit, and a third structural unit arranged sequentially in the first direction; and
wherein the first structural unit and the third structural unit both have an even number of the straight sections of the first plate, and the second structural unit has an odd number of the straight sections of the first plate.

9. The electrode assembly according to any one of claims 1-8, wherein, in the first direction, two straight sections located at both ends of the first plate are a first straight section and a second straight section, respectively;
in two adjacent structural units, the first straight section of one structural unit and the second straight section of another structural unit are two adjacent straight sections, and in a second direction, an end, away from the bending section, of the first straight section of one structural unit and an end, away from the bending section, of the second straight section of another structural unit are located at both sides of the electrode assembly, respectively, the second direction being perpendicular to the first direction.

10. The electrode assembly according to any one of claims 1-9, wherein in the structural unit, the number of the straight sections of the first plate is equal to the number of the second plate.

11. The electrode assembly according to any one of claims 1-10, wherein the electrode assembly further comprises a third plate having the same polarity as that of the first plate; and
in the first direction, at least one side of the plurality of structural units is provided with the third plate adjacent to the second plate of an adjacent structural unit.

12. The electrode assembly according to any one of claims 1-11, wherein the first plate is a negative plate, and the second plate is a positive plate.

13. The electrode assembly according to any one of claims 1-12, wherein each of the straight sections is provided with a first tab, and a plurality of the first tabs in each of the structural units are aligned in the first direction;
and each second plate is provided with a second tab, each of the structural units includes a plurality of the second plates, and a plurality of the second tabs in each of the structural units are aligned in the first direction.

14. The electrode assembly according to any one of claims 1-13, wherein the structural unit further comprises a separator to which the first plate and the second plate are joined, the separator being configured to separate the first plate and the second plate.

15. The electrode assembly according to any one of claims 1-14, wherein the bending section is provided with a guide portion configured to guide bending of the bending section.

16. The electrode assembly according to claim 15, wherein the guide portion comprises a groove provided in the bending section.

17. The electrode assembly according to claim 16, wherein the bending section comprises a current collector and two active material layers, the two active material layers are provided at both sides of the current collector, respectively, and at least one of the active material layers is provided with the groove.

18. The electrode assembly according to claim 17, wherein one of the active material layers is provided with the groove.

19. The electrode assembly according to claim 17, wherein the two active material layers are provided with the grooves.

20. The electrode assembly according to claim 19, wherein the guide portion further comprises a through hole passing through the current collector, the region where the current collector corresponds to the groove forms an inactive material layer region, and the through hole is provided in the inactive material layer region.

21. The electrode assembly according to claim 20, wherein the inactive material layer is provided with a plurality of through holes provided at intervals in a width direction of the first plate.

22. The electrode assembly according to any one of claims 17-21, wherein the groove extends in the width direction of the first plate and passes through the active material layer.

23. The electrode assembly according to any one of claims 17-21, wherein the active material layer is provided with a plurality of the grooves provided at intervals in the width direction of the first plate.

24. The electrode assembly according to claim 15, wherein the bending section comprises a current collector and two active material layers, the two active material layers are provided at both sides of the current collector, respectively, and the guide portion comprises a through hole provided in the bending section;
the through hole passing through the current collector and the two active material layers; or
the through hole passes through the current collector, and the two active material layers cover the through hole.

25. The electrode assembly according to claim 24, wherein the guide portion comprises a plurality of the through holes provided at intervals in the width direction of the first plate.

26. The electrode assembly according to claim 20, 21, 24 or 25, wherein the through hole is a rectangular hole.

27. The electrode assembly according to claim 26, wherein the cross section of the through hole is a rectangle having a length direction identical to the width direction of the first plate.

28. The electrode assembly according to claim 27, wherein the rectangle has a length of a and a width of b, where 10 ≤ a/b ≤ 400.

29. The electrode assembly according to claim 28, wherein 20 ≤ a/b ≤ 100.

30. The electrode assembly according to claim 28 or 29, wherein 3 mm ≤ a ≤ 20 mm and/or 0.05 mm ≤ b ≤ 0.3 mm.

31. A battery cell, comprising:
a housing,
the electrode assembly according to any one of claims 1-30, the electrode assembly being accommodated in the housing.

32. A battery comprising the battery cell according to claim 31.

33. An electrical apparatus comprising the battery cell according to claim 31 for supplying electrical energy.
